# EUROPEAN PATENT SPECIFICATION

(11) **EP 1 220 522 B1**
(45) Date of publication and mention of the grant of the patent: **11.01.2006**
(21) Application number: 01309823.1
(22) Date of filing: 22.11.2001
(51) Int. Cl.: H04M 1/725, H04M 1/65

(54) **Call screening in a cordless digital system**
Anrufüberwachung in einem digitalen drahtlosen System
Filtrage d'appels dans un système numérique sans fil

(30) Priority: 28.12.2000 US 752285
(43) Date of publication of application: 03.07.2002
(73) Proprietor: Siemens Communication, Inc., Boca Raton FL 33287 (US)
(72) Inventor: Siemens, Gerhard, 46325 Borken (DE); Sydon, Uwe, c/o Siemens AG Inf. and Comm. Mobile, 46395 Bocholt (DE)
(74) Representative: Allen, Derek

(56) References cited:
- WO-A-90/03068
- JP-A- 5 048 684
- US-A- 4 882 746

## Description

### BACKGROUND OF THE INVENTION

### 1. Field of the Invention

The present invention relates to personal telephone systems that are able to transmit and receive digital signals between fixed sets and fixed stations in a cordless system. More particularly, the present invention relates to providing a call screening service in a cordless telephone system.

### 2. Description of the Related Art

Time division multiple access (TDMA) cordless phone systems provide a base unit which is able to provide connections for a plurality of mobile units, such as handsets. Such TDMA systems use time division to provide a plurality of slots, where the base (fixed part (FP)) transmits to an individual (portable unit (PP)) mobile unit during a particular slot of time and receives from the individual mobile unit during a particular slot of time. One standard for TDMA systems is the Digital European Cordless Telecommunications DECT Common interface standard described in ETS 300 175-2 and ETS 300 175-3, published by the European Telecommunication Standards Institute. The DECT standard is also discussed in U.S. Patent 6,078,574 entitled "PROCESS AND APPARATUS FOR ACTION CONTROL IN A TIME SLOT METHOD", to Boetzel et al. issued June 20, 2000 and U.S. Patent 6,088,338 entitled "METHOD AND SYSTEM FOR THE DETERMINATION OF THE PSCN PARAMETER STARTING FROM THE MFN PARAMETER IN A DECT CORDLESS TELEPHONE SYSTEM" to Rossella et al. issued July 11, 2000. Generally, the DECT standard does not provide a specification to send a voice message to all mobile units simultaneously as a broadcast.

This unfortunate lack of a capability to simultaneously send a voice message to all mobile units associated with a base unit as a broadcast precludes providing a real time call screening mode for those mobile units. As well known in the art, call screening is a process whereby a potential callee screens (i.e., decides whether or not to immediately start a conversation with the caller) an incoming call by, in most cases, listening to the caller record a message on a recording device coupled to the callee's telephone. Such recording devices typically include answering machines having speaker capabilities that allow a caller's message to be listened to as well as recorded simultaneously. When the callee decides to start a conversation with the caller, then the callee picks up his phone and begins the conversation, otherwise, the caller is left to complete his/her message to be recorded by the associated recording device.

Unfortunately, since conventional cordless telephone systems do not provide a broadcast mode, it is impossible for any one of a number of mobile units coupled to a base unit to selectively listen to and pick up an incoming call without interference from the other mobile units.

PCT Patent Application WO 90/03,068 describes two-way radio communications system having selectable operating modes.

Therefore, it is desirable to provide a mechanism whereby any of a number of mobile units coupled to a base unit can call screen an incoming call such that only one of the mobile units can initiate a conversation.

### SUMMARY OF THE INVENTION

The invention comprises a call screening method suitable for a cordless telephone system having a base station operable in a broadcast mode and a standard mode communicatively coupled to a plurality of mobile units, comprising: setting the base station in the broadcast mode; signaling that an incoming call by a caller has been received by the base station; substantially simultaneously, recording an incoming message, and broadcasting the incoming message to said plurality of mobile units; determining if one of the plurality of mobile units, as a callee, desires to initiate a conversation with the caller based upon the incoming message; setting the base station to a standard mode when it is determined that one of the plurality of mobile units desires to converse with the caller; and initiating the conversation between the callee and the caller, and locking out the other mobile units from said conversation.

These and other features of the present invention will be described in more detail below in the detailed description of the invention and in conjunction with the following figures.

### BRIEF DESCRIPTION OF THE DRAWINGS

The present invention is illustrated by way of example, and not by way of limitation, in the figures of the accompanying drawings and in which like reference numerals refer to similar elements and in which:
Fig. 1 is a schematic view of a cordless system that uses the invention.
Fig. 2 shows a DECT frame structure.
FIG. 3 is a high level flow chart of a method used in the accordance with an embodiment of the invention.
Fig. 4 illustrates a flow chart detailing a process for call screening in accordance with an embodiment of the invention.

### DETAILED DESCRIPTION OF THE PREFERRED EMBODIMENT

The present invention will now be described in detail with reference to a few preferred embodiments thereof as illustrated in the accompanying drawings. In the following description, numerous specific details are set forth in order to provide a thorough understanding of the present invention. It will be apparent, however, to one skilled in the art, that the present invention may be practiced without some or all of these specific details. In other instances, well known process steps and/or structures have not been described in detail in order to not unnecessarily obscure the present invention.

In one embodiment of the invention, a base unit receives an incoming call. The base station then provides a signal to all associated mobile units (and their respective users each being a potential callee) that an incoming call from a caller has been received and that both a recording and a broadcast of the caller's incoming message will soon commence. Typically, this signal is an audible signal such as a predetermined number of rings, or a specially selected ring, or some combination thereof. The base unit then turns on an incoming message record unit (such as a tape recorder) and once the caller begins his/her incoming message, it is both recorded by the incoming message record unit as well as broadcast, in real time, to all active mobile units (only those mobile units that are "on" are considered active). If any of the user's currently listening to the incoming message that is being broadcast desires to actively start a conversation with the caller (as the callee), then the user signals the base unit that he/she would like to take the incoming call. The base station is then set to a standard mode thereby locking out the other mobile units so as to preclude any interference with the forthcoming conversation between the callee and the caller.

In this way, the inventive cordless telephone system provides the capability of real time call screening to any number of mobile units associated with the particular base station.

The invention will now be described in terms of a digital cordless phone system having a base station communicatively coupled to any number of associated mobile units. Each of the mobile units has associated with it a user.

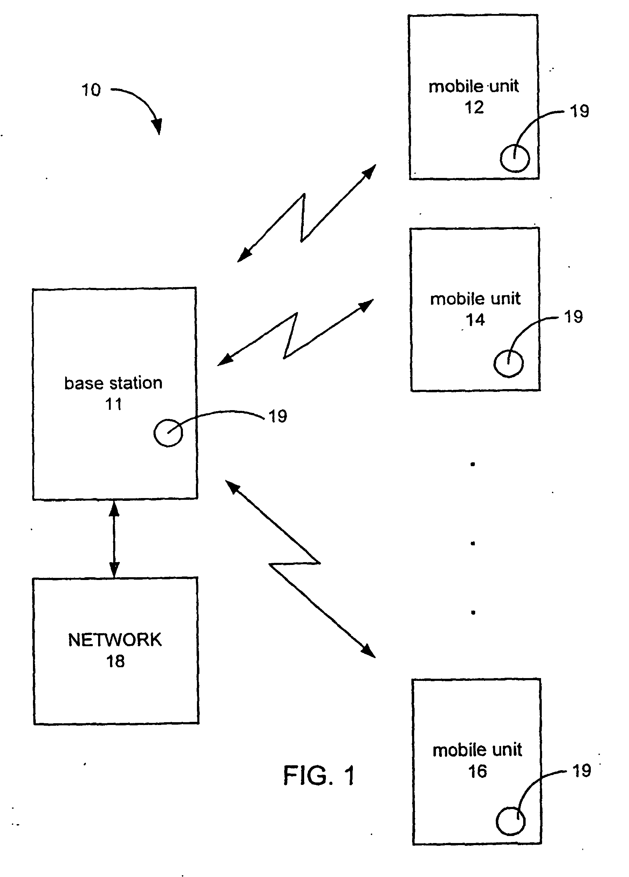

To facilitate discussion, Fig. 1 is a schematic view of a cordless system 10, such as a cordless telephone system that utilizes the invention. The cordless system 10 comprises a base station 11 and a plurality of portable units 12, 14, 16. The base station 11 of the cordless system 10 is connected to a network 18. The plurality of portable units 12, 14, 16 communicate with the base station 11, which provides communications between the plurality of portable units 12, 14, 16 and the network 18. Although only three portable units 12, 14, 16 are illustrated other numbers of portable units are possible. For example there may be twelve portable units communicating to the base station 11. In this embodiment of the invention, time division multiple access (TDMA) is used to provide communication between each of the plurality of portable units 12, 14, 16 and the base station 11. The base station 11 and the plurality of portable units 12, 14, 16 each have a broadcast button 19.

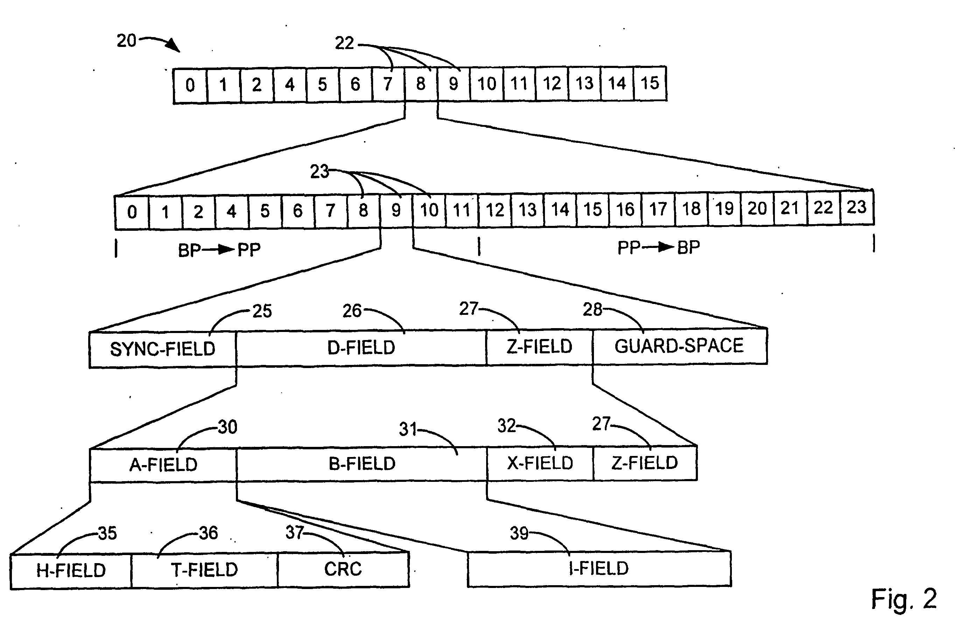

Fig. 2 illustrates a DECT frame structure that uses TDMA and may be used in an embodiment of the invention. A multiframe 20 may contain sixteen frames 22. Each frame 22 of the multiframe 20 may be 10 ms (milliseconds). Each frame 22 of the multiframe 20 may be split into two sets of twelve full slots 23 of equal size. The slots 23 may be time slots. The base station 11 may transmit to the plurality of portable units 12, 14, 16 for the first 5 ms., corresponding to slots 0 to 11 (illustrated as the BP→PP (base station to portable unit transmission)). For the second 5 ms., corresponding to slots 12 to 23 (illustrated as the PP→BP (base station to portable unit transmission)) the base station may receive from the plurality of portable units 12, 14, 16. A pair of time slots 23, such as slots 0 and 12, or 1 and 13 for transmitting and receiving may form a connection (channel). Each portable unit 12, 14, 16 may be assigned a slot 23 from the first 5 ms, and a slot 23 from the second 5 ms., so that each portable unit 12, 14, 16 may be assigned a channel. Since there are twelve channels, the base station 11 may accommodate twelve portable units.

Each time slot 23 may last for 416 µs, which may correspond to 480 bits. Each time slot may be split into a 32 bit synchronization field (sync-field) 25, a 388 bit D-field 26, a four bit Z-field 27, and a 56 bit guard space 28. The D-field 26 may comprise a 64 bit A-field 30, a 320 B-field 31, and a four bit X-field 32. The A field 30 may comprise an eight bit header (H-field) 35, a forty bit tail (T-field) 36, and a 16 bit redundancy (CRC) 37. The B-field 31 may comprise a 320 bit information field (I-field) 39. The I-field 39 may be used to carry data, such as part of a digitized audio message. The header 35 may describe the information in the tail 36. Various commands and command information, such as identification commands, frequency information, slot/frame information, and slot commands may be placed in the tail 36. The base station 11 and portable units 12, 14, 16 receive messages and process the commands in the tail 36.

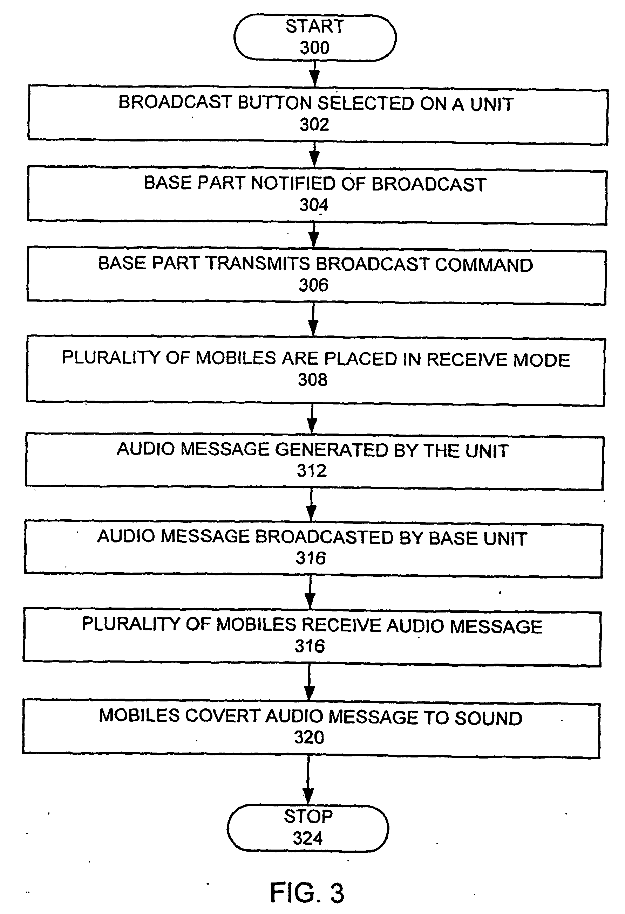

FIG. 3 is a high level flow chart of a method used in the preferred embodiment of the invention. A broadcast button 19 (FIG. 1) is selected on a unit (step 302). The base station 11 and the portable units 12, 14, 16 may have broadcast buttons 19, that allow either the base station 11 or one of the portable units 12, 14, 16 to broadcast. The broadcast button 19 may be a button dedicated only to broadcasting or one or more general purpose buttons, which may be pushed in a special sequence for broadcasting. The base station 11 is notified of the selection of the broadcast button 19 (step 304). If the broadcast button 19 on the base station 11 is selected, then the selection of the broadcast button 19 is noted by the base station 11. If the broadcast button 19 on one of the portable units 12, 14, 16 is selected, a broadcast command may be placed in the T-field 36 of a message sent to the base station 11. The base station is then notified of the selection of the broadcast button 19. In this example, the broadcast button 19 for the first portable unit 12 is selected, where the first portable unit uses slots 1 and 13. The base station 11 receives a message during slot 13 with a broadcast command in the T-field 36, which the base station 11 recoanizes as a broadcast request from the first portable unit 12.

The base station 11 then transmits a broadcast command (step 306). In this example, the base station transmits broadcast command messages during slots 0 and 2-11 with a broadcast command in the T-field with a slot designation, for example slot 4. The remaining plurality of portable units 14, 16 receive the broadcast command messages. The broadcast command in the T-field causes the remaining plurality of portable units 14, 16 to go a receive only mode and become synchronized to receive signals from the designated slot, in this example slot 4 (step 308). The first portable unit 12 may transmit a plurality of messages with digitized audio information in the I-field 39 (step 312). The base station 11 receives the messages from the first portable unit 12 at slot 13 and sends broadcast messages with the same digitized audio text during slot 4, thus rebroadcasting the audio message (step 316). Since the remaining plurality of portable units 14, 16 are in a receiving mode and synchronized with slot 4, all of the remaining plurality of portable units 14, 16 receive the audio message (step 316) and access the digital data in the I-field 39 to convert the audio message to sound (step 320). The first portable unit 12 or the base station 11 may terminate the broadcast mode by having the base station 11 transmit a message that commands the remaining plurality of portable units 14, 16 to synchronize with different slots.

If the broadcast button 19 on the base station 11 is selected, then the broadcast audio message is generated at the base station 11. In such a case, the broadcast message is not received by the base station 11 through one of the slots.

In one embodiment of the invention, if a portable unit of the remaining plurality of portable units is busy (i.e. is being used for a telephone conversation) that portable unit will ignore the broadcast message.

The network 18 may be a regular telephone system. In the alternative, the network 18 may form a network of base stations. Such a network may form a large network of base stations communicating with portable units. In such a situation, it may be desirable to provide an audio broadcast to portable units associated with all of the base stations. In such a case, the base station 11 may also send the audio message to the network 18 of base stations, which broadcast the audio message to the portable units using the above mentioned method.

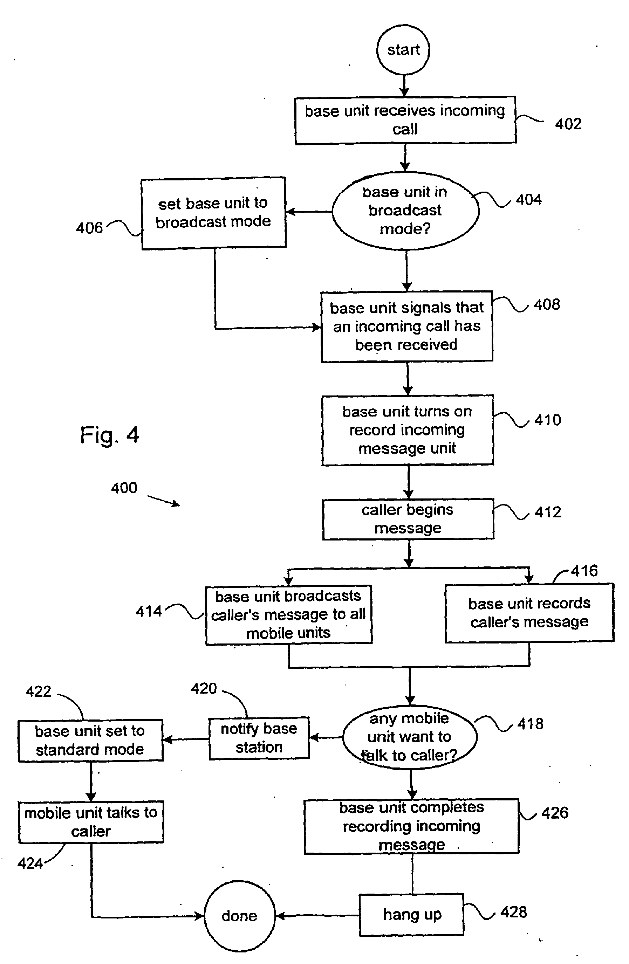

Fig. 4 is a flowchart detailing a call screening process 400 implemented by the particular embodiment of a cordless phone system 10 shown in Fig. 1. The process 400 begins at 402 by a call being received at a base station. A determination is then made at 404 whether or not the base station is in a broadcast mode. If the base station is not in the broadcast mode, then the base station is set to operate in the broadcast mode at 406. In any case, at 408, the base unit (in broadcast mode) signals that an incoming call has been received. In a preferred embodiment, the base unit utilizes a selected audio signal, such as a predetermined number of rings or combination of rings, as the signal. At 410, the base unit turns on a record incoming message unit, such as a tape or digital recording device and at 412, the caller begins to speak his/her message. Once the caller begins his/her incoming message, the base station substantially simultaneously broadcasts the caller's message to all mobile units at 414 and records the caller's message at 416. At 418, a determination is made whether any of the mobile units receiving the broadcast wishes to talk to the caller. If a user of a mobile unit desires to talk to the caller, the user (as callee) signals as such to the.base station at 420 which sets the base station to standard mode at 422 thereby enabling the callee to speak to the caller at 424 without interference by any of the other mobile units. If, however, at 418, none of the listening mobile units desires to speak to the callee, then at 426, the base station completes recording the incoming message and hangs up at 428.

One of the units may be a hands-free unit.

## Claims

1. A call screening method suitable for a cordless telephone system having a base station (11) operable in a broadcast mode and a standard mode communicatively coupled to a plurality of mobile units (12, 14, 16), comprising:
setting the base station (11) in the broadcast mode;
signaling that an incoming call by a caller has been received by the base station (11);
substantially simultaneously,
recording an incoming message, and
broadcasting the incoming message to said plurality of mobile units (12, 14, 16);
determining if one of the plurality of mobile units, as a callee, desires to initiate a conversation with the caller based upon the incoming message;
setting the base station (11) to a standard mode when it is determined that one of the plurality of mobile units (12, 14, 16) desires to converse with the caller; and
initiating the conversation between the callee and the caller, and locking out the other mobile units from said conversation.

2. A method as recited in claim 1, further comprising:
broadcasting the incoming message from the base station (11) during a single time slot of a time division;
receiving the incoming message at the plurality of mobile units(12, 14, 16); and
converting the incoming message into sound by the plurality of mobile units (12, 14, 16).

3. The method, as recited in claim 1, further comprising:
placing the plurality of mobile units (12, 14, 16) in a receiving mode.

4. The method, as recited in claim 3, wherein the placing the plurality of mobile units (12, 14, 16) in a receiving mode comprises synchronizing the plurality of mobile units to the single time slot .

5. The method, as recited in claim 4, wherein setting the base station (11) to the broadcast mode comprises designating the single time slot.

6. The method, as recited in claim 5, wherein at least one of the plurality of mobile units is a hands free unit, wherein converting the audio message into sound by the hands free unit is automatic, and wherein the placing of the plurality of mobile units in a receiving mode places the plurality of mobile units in a receive only mode.

7. The method, as recited in claim 6, further comprising:
originating broadcast origination signal at an additional mobile unit;
transmitting a broadcast origination signal from the additional mobile unit to the base station

8. The method, as recited in claim 7, wherein placing the plurality of mobile units in a receive only mode, comprises turning on only speakers of the plurality of mobile units (12, 14, 16) without turning on microphones of the plurality of mobile units.

9. The method as recited in claim 1, wherein setting the base station (11) to the standard mode comprises synchronizing those plurality of mobile units (12, 14, 16) not desiring to converse with the caller to another time slot that is different than the single time slot.

## Patentansprüche

1. Verfahren zur Anrufüberwachung, das geeignet ist für ein drahtloses Telefonsystem, welches eine Basisstation (11) beinhaltet, die sowohl in einem Rundsende-Modus als auch in einem Standard-Modus betrieben werden kann und die kommunizierend mit einer Mehrzahl von Mobilstationen (12, 14, 16) verbunden ist, wobei das Verfahren Folgendes umfasst:
Schalten der Basisstation (11) in den Rundsende-Modus;
Signalisieren, dass ein kommender Anruf von einem rufenden Teilnehmer an der Basisstation (11) empfangen wurde;
im Wesentlichen gleichzeitig
Aufzeichnen einer kommenden Nachricht und
Rundsenden der kommenden Nachricht an besagte Mehrzahl von Mobilstationen (12, 14, 16);
Feststellen, ob eine der Mehrzahl von Mobilstationen als gerufener Teilnehmer aufgrund der kommenden Nachricht ein Gespräch mit dem rufenden Teilnehmer beginnen will;
Schalten der Basisstation (11) in einen Standard-Modus, wenn festgestellt wird, dass eine der Mehrzahl von Mobilstationen (12, 14, 16) ein Gespräch mit dem rufenden Teilnehmer beginnen will; sowie
Herstellen der Gesprächsverbindung zwischen dem gerufenen Teilnehmer und dem rufenden Teilnehmer und Ausschließen der anderen Mobilstationen von dem besagten Gespräch.

2. Verfahren gemäß Anspruch 1, das ferner Folgendes umfasst:
Rundsenden der kommenden Nachricht von der Basisstation (11) während eines einzigen Zeitschlitzes eines Zeitmultiplex;
Empfangen der kommenden Nachricht an der Mehrzahl von Mobilstationen (12, 14, 16); sowie
Umwandeln der kommenden Nachricht in Tonsignale durch die Mehrzahl von Mobilstationen (12, 14, 16).

3. Verfahren gemäß Anspruch 1, das ferner Folgendes umfasst:
Schalten der Mehrzahl von Mobilstationen (12, 14, 16) in einen Empfangs-Modus.

4. Verfahren gemäß Anspruch 3, wobei das Schalten der Mehrzahl von Mobilstationen (12, 14, 16) in einen Empfangs-Modus die Synchronisation der Mehrzahl von Mobilstationen auf einen einzelnen Zeitschlitz umfasst.

5. Verfahren gemäß Anspruch 4, wobei das Schalten der Basisstation (11) in den Rundsende-Modus die Bezeichnung des einzelnen Zeitschlitzes beinhaltet.

6. Verfahren gemäß Anspruch 5, wobei mindestens eine der Mehrzahl von Mobilstationen eine Einheit mit Freisprecheinrichtung ist, wobei die Umwandlung der Audio-Nachricht in Tonsignale durch die Einheit mit Freisprecheinrichtung automatisch erfolgt, und wobei das Schalten der Mehrzahl von Mobilstationen in einen Empfangs-Modus die Mehrzahl von Mobilstationen in einen Nur-Empfangen-Modus schaltet.

7. Verfahren gemäß Anspruch 6, das ferner Folgendes umfasst:
Erzeugen eines Rundsende-Startsignals an einer zusätzlichen Mobilstation;
Senden eines Rundsende-Startsignals von der zusätzlichen Mobilstation an die Basisstation.

8. Verfahren gemäß Anspruch 7, wobei das Schalten der Mehrzahl von Mobilstationen in einen Nur-Empfangen-Modus beinhaltet, dass nur die Lautsprecher der Mehrzahl von Mobilstationen (12, 14, 16) eingeschaltet werden, ohne dass auch die Mikrofone der Mehrzahl von Mobilstationen eingeschaltet werden.

9. Verfahren gemäß Anspruch 1, wobei das Schalten der Basisstation (11) in den Standard-Modus die Synchronisation derjenigen Mobilstationen (12, 14, 16), die nicht mit dem rufenden Teilnehmer sprechen wollen, auf einen anderen Zeitschlitz beinhaltet, der verschieden ist von dem besagten einzelnen Zeitschlitz.

## Revendications

1. Procédé de filtrage d'appels adapté à un système téléphonique sans fil comportant une station de base (11) exploitable dans un mode de diffusion et un mode standard couplée de façon à communiquer, à une pluralité d'unités mobiles (12, 14, 16), consistant à :
régler la station de base (11) sur le mode de diffusion ;
signaler qu'un appel entrant d'un appelant a été reçu par la station de base (11) ;
autant dire simultanément,
enregistrer un message entrant et
diffuser le message entrant à ladite pluralité d'unités mobiles (12, 14, 16) ;
déterminer si l'une parmi la pluralité d'unités mobiles, en tant qu'appelé, souhaite amorcer une conversation avec l'appelant sur la base du message entrant ;
régler la station de base (11) sur un mode standard quand il est déterminé que l'une parmi la pluralité d'unités mobiles (12, 14, 16) souhaite converser avec l'appelant, et
amorcer la conversation entre l'appelé et l'appelant, et exclure les autres unités mobiles de ladite conversation.

2. Procédé selon la revendication 1, comprenant par ailleurs :
la diffusion du message entrant depuis la station de base (11) durant une tranche de temps unique d'une division temporelle ;
la réception du message entrant par la pluralité d'unités mobiles (12, 14, 16), et
la conversion du message entrant en son par la pluralité d'unités mobiles (12, 14, 16).

3. Procédé selon la revendication 1, consistant par ailleurs à :
placer la pluralité d'unités mobiles (12, 14, 16) dans un mode de réception.

4. Procédé selon la revendication 3, dans lequel le placement de la pluralité d'unités mobiles (12, 14, 16) dans un mode de réception consiste à synchroniser la pluralité d'unités mobiles dans la tranche de temps unique.

5. Procédé selon la revendication 4, dans lequel le réglage de la station de base (11) sur le mode de diffusion comprend la désignation de la tranche de temps unique.

6. Procédé selon la revendication 5, dans lequel au moins l'une parmi la pluralité d'unités mobiles est une unité mains-libres, dans lequel la conversion du message audio en son par l'unité mains-libres est automatique et dans lequel le placement de la pluralité d'unités mobiles dans un mode de réception place la pluralité d'unités mobiles dans un mode de réception seulement.

7. Procédé selon la revendication 6, consistant par ailleurs à :
émettre un signal d'émission en diffusion au niveau d'une unité mobile additionnelle ;
transmettre un signal d'émission en diffusion de l'unité mobile additionnelle à la station de base.

8. Procédé selon la revendication 7, dans lequel le placement de la pluralité d'unités mobiles dans un mode de réception seulement consiste à activer uniquement les haut-parleurs de la pluralité d'unités mobiles (12, 14, 16) sans activer les microphones de la pluralité d'unités mobiles.

9. Procédé selon la revendication 1, dans lequel le réglage de la station de base (11) sur le mode standard consiste à synchroniser la pluralité d'unités mobiles (12, 14, 16) ne souhaitant pas converser avec l'appelant avec une autre tranche de temps qui est différente de la tranche de temps unique.
